# EUROPEAN PATENT APPLICATION

(11) **EP 4 580 078 A1**
(43) Date of publication of application: **02.07.2025**
(21) Application number: 23886400.3
(22) Date of filing: 03.11.2023
(51) Int. Cl.: H04B 7/0408, H04B 7/024, H04B 7/08, H04W 72/23, H04W 72/04, H04W 52/14

(54) **UNIFIED TCI CONFIGURATION METHOD AND DEVICE IN COMMUNICATION SYSTEM USING MULTIPLE TRANSMISSION AND RECEPTION POINTS**

(30) Priority: 04.11.2022 KR 20220146341
(71) Applicant: Hyundai Motor Company, Seoul 06797 (KR); Kia Corporation, Seoul 06797 (KR)
(72) Inventor: LEE, Jeong Su, Hwaseong-si, Gyeonggi-do 18280 (KR)
(74) Representative: Isarpatent
(86) International application number: PCT/KR2023/017591
(87) International publication number: WO 2024/096706

(57) **Abstract**

A method of a UE, according to one embodiment of the present disclosure, may comprise the steps of: receiving a UE capability information request message from a base station; transmitting, to the base station, in response to the reception of the UE capability information request message, UE capability information including a number of panels and a number of ports of the UE; and receiving, from the base station, upper layer signaling including panel-specific TCI state pool information, wherein the TCI state pool information configured for each panel can include cell lists having one or more cells.

## Description

### Technical Field

The present disclosure relates to improved communication technology, and more particularly, to a transmission technology of a multiple transmission and reception point (MTRP).

### Background Art

Communication networks (e.g., 5G communication networks, 6G communication networks, etc.) are being developed to provide improved communication services compared to existing communication networks (e.g., LTE (long term evolution), LTE-A (advanced), etc.). A 5G communication network (e.g., NR (new radio) communication network) can support not only a frequency band below 6 GHz but also a frequency band above 6 GHz. That is, the 5G communication network can support FR1 band and/or FR2 band. The 5G communication network can support various communication services and scenarios compared to an LTE communication network. For example, usage scenarios of the 5G communication network may include eMBB (enhanced Mobile BroadBand), URLLC (Ultra Reliable Low Latency Communication), mMTC (massive Machine Type Communication), etc.

6G communication networks can support various communication services and scenarios compared to 5G communication networks. 6G communication networks can satisfy requirements of ultra-performance, ultra-bandwidth, ultra-space, ultra-precision, ultra-intelligence, and/or ultra-reliability. 6G communication networks can support various and wide frequency bands and can be applied to various usage scenarios (e.g., terrestrial communication, non-terrestrial communication, sidelink communication, etc.).

Meanwhile, in 5G NR, the Multiple Transmission and Reception Point (MTRP) technology refers to a technique in which a base station (e.g., gNB) communicates with a terminal by utilizing multiple transmission reception points (TRPs) that are physically separated. MTRP technology can solve the problem of reduced quality-of-service (QoS) when a terminal located at the cell-edge is far from the base station and the problem of inter-cell interference from base stations located in different cells. In addition, MTPR technology may play a role in providing an additional communication path, which is a non-line-of-sight (NLOS) path, from the base station in cases where a line-of-sight (NLOS) path from the base station is limited, such as in the millimeter wave band.

The definition of beam management for TRP in 5G NR may be defined as a set of L1/L2 procedures for finding or maintaining an optimal beam required for transmission/reception of each of a TRP and a terminal. In particular, for beam management related to analog beamforming, a transmission configuration index (TCI) is introduced to configure a reception beam of a terminal for a specific channel/signal, for example, PDSCH/CSI-RS/PDCCH. The TCI is introduced to dynamically indicate quasi-colocation (QCL) information through downlink control information (DCI) at the base station.

On the other hand, recently, it is being considered that not only the base station but also the terminal has two or more panels. If the terminal has multiple panels, it should be able to report the channel measurement results for beam management in units of panels of the terminal. However, such a method has not been proposed at present. Therefore, a method is required to report the channel measurement results of the terminal for each panel.

### Disclosure

### Technical Problem

An object of the present disclosure to solve the above problems is to provide a method and device capable of reporting channel measurement results of a terminal for each panel when a communication system has an MTRP environment.

### Technical Solution

A method of a user equipment (UE) according to a first embodiment of the present disclosure for achieving the above object may comprise receiving a UE capability information enquiry message from a base station, transmitting UE capability information including a number of panels of the UE and a number of ports to the base station, in response to reception of the UE capability information enquiry message, and receiving higher layer signaling including transmission configuration index (TCI) state pool information of each panel from the base station,
the TCI state pool information configured for each panel may include cell lists including one or more cells.

The TCI state pool information configured for each panel may be,
composed of a joint TCI state indication commonly indicated in a downlink (DL)/uplink (UL) channel or the DL channel separate TCI state indication and the UL channel separate TCI state indication.

In the TCI state pool information configured for each panel,
a joint TCI state indication may be configured for a first panel of the UE and the DL channel separate TCI state indication and the UL channel separate TCI state indication may be configured for a second panel of the UE.

The method may further comprise receiving a message indicating activation or deactivation of a TCI state in each of panels of the UE from the base station, and
indication of activation or deactivation of the TCI state in each of the panels of the UE may be indicated using a cell list.

Indication of activation or deactivation of the TCI state in each of the panels of the UE may be,
indicated by activation/deactivation of a reference cell representing cells of the cell list.

The method of may further comprise receiving a second message indicating activation or deactivation of at least one of a plurality of panels when the UE has the plurality of panels and communicating with the base station based on indication of activation or deactivation of the second message.

A user equipment (UE) according to a first embodiment of the present disclosure may comprise at least one processor. The at least one processor may cause the UE,
to receive a UE capability information enquiry message from a base station, transmit UE capability information including a number of panels of the UE to the base station, in response to reception of the UE capability information enquiry message and receive higher layer signaling including transmission configuration index (TCI) state pool information of each panel from the base station,
the TCI state pool information configured for each panel may include cell lists including one or more cells.
the TCI state pool information configured for each panel may be,
composed of a joint TCI state indication commonly indicated in a downlink (DL)/uplink (UL) channel or the DL channel separate TCI state indication and the UL channel separate TCI state indication.

In the TCI state pool information configured for each panel,
a joint TCI state indication may be configured for a first panel of the UE and the DL channel separate TCI state indication and the UL channel separate TCI state indication may be configured for a second panel of the UE.

The at least one processor may further cause the UE,
to receive a message indicating activation or deactivation of a TCI state in each of panels of the UE from the base station, and
indication of activation or deactivation of the TCI state in each of the panels of the UE may be indicated using a cell list.

Indication of activation or deactivation of the TCI state in each of the panels of the UE may be,
indicated by activation/deactivation of a reference cell representing cells of the cell list.

The at least one processor may cause the UE,
to receive a second message indicating activation or deactivation of at least one of a plurality of panels when the UE has the plurality of panels and communicate with the base station based on indication of activation or deactivation of the second message.

A method of a base station according to a first embodiment of the present disclosure may comprise transmitting a UE capability information enquiry message to a user equipment (UE), receiving UE capability information including a number of panels of the UE from the UE, and transmitting higher layer signaling including transmission configuration index (TCI) state pool information of each panel to the UE based on panel number information of the UE when the UE has a plurality of panels,
the TCI state pool information configured for each panel may include cell lists including one or more cells.

The TCI state pool information configured for each panel may be,
composed of a joint TCI state indication commonly indicated in a downlink (DL)/uplink (UL) channel or the DL channel separate TCI state indication and the UL channel separate TCI state indication.

In the TCI state pool information configured for each panel,
a joint TCI state indication may be configured for a first panel of the UE and the DL channel separate TCI state indication and the UL channel separate TCI state indication may be configured for a second panel of the UE.

The method may further comprise generating a message indicating activation or deactivation of a TCI state using an update list corresponding to each of panels of the UE when activation or deactivation is required among cells included in the update list of the TCI state pool and transmitting a first message indicating activation or deactivation of the generated TCI state to the UE.

The first message may be transmitted through medium access control-control element (MAC-CE) signaling.

### Advantageous Effects

According to the present disclosure, when a UE has multiple panels, a TCI state may be configured differently for each panel, and a TCI state configured differently for each panel may be activated or deactivated. In addition, a panel of a specific UE may be controlled to be turned on/off when it is unnecessary for communication or interference with another UE may occur. In addition, since communication can be performed based on the TCI state configured for each panel, there is an advantage in that more efficient communication is possible for each panel.

### Description of Drawings

FIG. 1 is a conceptual diagram illustrating a first embodiment of a communication system.
FIG. 2 is a block diagram illustrating a first embodiment of a communication node constituting a communication system.
FIG. 3 is a block diagram illustrating a first embodiment of communication nodes performing communication.
FIG. 4a is a block diagram illustrating a first embodiment of a transmission path.
FIG. 4b is a block diagram illustrating a first embodiment of a reception path.
FIG. 5 is a conceptual diagram illustrating a first embodiment of a system frame in a communication system.
FIG. 6 is a conceptual diagram illustrating a first embodiment of a subframe in a communication system.
FIG. 7 is a conceptual diagram illustrating a first embodiment of a slot in a communication system.
FIG. 8 is a conceptual diagram illustrating a first embodiment of a time-frequency resource in a communication system.
FIG. 9 is a conceptual diagram illustrating a TCI state indication for a single CC/BWP in a state where a UE is connected to an MTRP.
FIG. 10 is a conceptual diagram explaining a TCI state pool configuration considering panels of a UE.
FIG. 11 is a conceptual diagram illustrating a MAC CE for activating and deactivating a TCI state when using a unified TCI pool.
FIG. 12 is a conceptual diagram illustrating a part of a MAC CE for activating and deactivating a TCI state for each panel when using a unified TCI pool.
FIG. 13 is a flowchart for a case of configuring a TCI state and performing communication for a UE having multiple panels.
FIG. 14 is a flowchart for a case where a base station instructs on/off at least one of the panels of a UE according to the present disclosure.

### Mode for Invention

The present disclosure may have various modifications and embodiments, and specific embodiments are illustrated in the drawings and described in detail in the detailed description. However, this is not intended to limit the present disclosure to specific embodiments, but should be understood to include all modifications, equivalents, or substitutes included in the spirit and technical scope of the present disclosure.

In the present disclosure, the terms first, second, etc. may be used to describe various components, but the components should not be limited by the terms. The terms are only used for the purpose of distinguishing one component from another. For example, without departing from the scope of the present disclosure, the first component may be referred to as the second component, and similarly, the second component may also be referred to as the first component. The term and/or includes a combination of a plurality of related described items or any item among a plurality of related described items.

In the present disclosure, "at least one of A and B" can mean "at least one of A or B" or "at least one of combinations of one or more of A and B." Furthermore, in the present disclosure, "one or more of A and B" can mean "one or more of A or B" or "one or more of combinations of one or more of A and B."

In the present disclosure, (re)transmission can mean "transmission", "retransmission", or "transmission and retransmission", (re)configuration can mean "configuration", "reconfiguration", or "configuration and reconfiguration", (re)connection can mean "connection", "reconnection", or "connection and reconnection", and (re)access can mean "access", "re-access", or "access and re-access".

When it is said that a component is 'coupled to' or 'connected to' another component, it should be understood that the one component is connected to the other component directly or through any other component in between. On the other hand, when it is said that a component is 'directly connected to' or 'directly coupled to' another component, it should be understood that there is no other component between the components.

The terminology used in the present disclosure is only used to describe specific embodiments and is not intended to limit the present disclosure. The singular expression includes the plural expression unless the context clearly indicates otherwise. In the present disclosure, it should be understood that terms such as "include" or "have" are intended to specify the presence of a feature, number, step, operation, component, part or combination thereof described in the specification, but do not exclude in advance the possibility of the presence or addition of one or more other features, numbers, steps, operations, components, parts or combinations thereof.

Unless otherwise defined, all terms used herein, including technical or scientific terms, have the same meaning as commonly understood by a person of ordinary skill in the art to which the present disclosure belongs. Terms defined in commonly used dictionaries should be interpreted as having a meaning consistent with the meaning they have in the context of the relevant art, and will not be interpreted in an idealized or overly formal sense unless explicitly defined in the present disclosure.

Hereinafter, with reference to the attached drawings, preferred embodiments of the present disclosure will be described in more detail. In order to facilitate an overall understanding in describing the present disclosure, the same reference numerals are used for the same components in the drawings, and redundant descriptions of the same components are omitted. In addition to the embodiments explicitly described in the present disclosure, operations according to combinations of embodiments, extensions of embodiments, and/or modifications of embodiments may be performed. The performance of some operations may be omitted, and the order of performing operations may be changed.

In an embodiment, even if a method (e.g., transmission or reception of a signal) performed by a first communication node among communication nodes is described, a second communication node corresponding thereto may perform a method (e.g., reception or transmission of a signal) corresponding to the method performed by the first communication node. That is, if an operation of a UE (user equipment) is described, a base station corresponding thereto may perform an operation corresponding to the operation of the UE. Conversely, if an operation of a base station is described, a UE corresponding thereto may perform an operation corresponding to the operation of the base station.

The base station may be referred to as a NodeB, an evolved NodeB, a gNodeB (next generation node B), a gNB, a device, an apparatus, a node, a communication node, a BTS (base transceiver station), an RRH (radio remote head), a TRP (transmission reception point), an RU (radio unit), an RSU (road side unit), a radio transceiver, an access point, an access node, etc. The UE may be referred to as a terminal, a device, an apparatus, a node, a communication node, an end node, an access terminal, a mobile terminal, a station, a subscriber station, a mobile station, a portable subscriber station, an OBU (on-broad unit), etc.

In the present disclosure, signaling may be at least one of higher layer signaling, MAC signaling, or PHY (physical) signaling. A message used for higher layer signaling may be referred to as a "higher layer message" or a "higher layer signaling message". A message used for MAC signaling may be referred to as a "MAC message" or a "MAC signaling message". A message used for PHY signaling may be referred to as a "PHY message" or a "PHY signaling message". Higher layer signaling may mean a transmission and reception operation of system information (e.g., MIB (master information block), SIB (system information block)) and/or RRC message. MAC signaling may mean a transmission and reception operation of MAC CE (control element). PHY signaling may mean a transmission and reception operation of control information (e.g., DCI (downlink control information), UCI (uplink control information), SCI (sidelink control information)).

In the present disclosure, "an operation (e.g., a transmission operation) is configured" may mean that "configuration information of the operation (e.g., an information element, a parameter)" and/or "information indicating performance of the operation" are signaled. "An information element (e.g., a parameter) is configured" may mean that the information element is signaled. In the present disclosure, "a signal and/or a channel" may mean a signal, a channel, or "a signal and a channel," and a signal may be used to mean "a signal and/or a channel."

The communication network to which the embodiment is applied is not limited to what is described below, and the embodiment may be applied to various communication networks (e.g., a 4G communication network, a 5G communication network, and/or a 6G communication network). Here, the communication network may be used in the same meaning as the communication system.

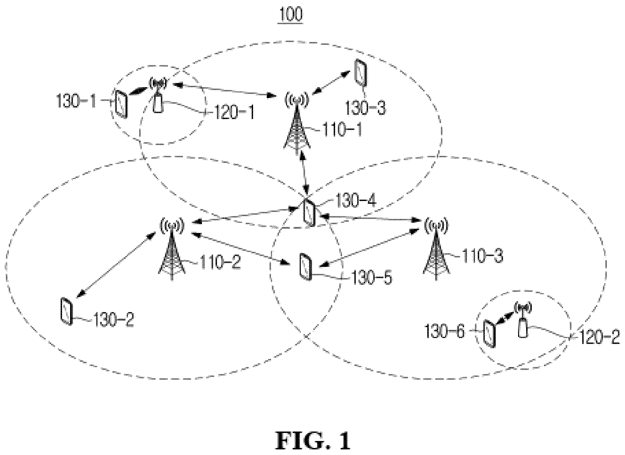

FIG. 1 is a conceptual diagram illustrating a first embodiment of a communication system.

Referring to FIG. 1, the communication system 100 may include a plurality of communication nodes 110-1, 110-2, 110-3, 120-1, 120-2, 130-1, 130-2, 130-3, 130-4, 130-5 and 130-6. In addition, the communication system 100 may further include a core network (e.g., a serving-gateway (S-GW), a packet data network (PDN)-gateway (P-GW), a mobility management entity (MME)). If the communication system 100 is a 5G communication system (e.g., a new radio (NR) system), the core network may include an access and mobility management function (AMF), a user plane function (UPF), a session management function (SMF), etc.

The plurality of communication nodes 110 to 130 may support a communication protocol specified in a 3rd generation partnership project (3GPP) standard (e.g., LTE communication protocol, LTE-A communication protocol, NR communication protocol, etc.). The plurality of communication nodes 110 to 130 may support CDMA (code division multiple access) technology, WCDMA (wideband CDMA) technology, TDMA (time division multiple access) technology, FDMA (frequency division multiple access) technology, OFDM (orthogonal frequency division multiplexing) technology, Filtered OFDM technology, CP (cyclic prefix)-OFDM technology, DFT-s-OFDM (discrete Fourier transform-spread-OFDM) technology, OFDMA (orthogonal frequency division multiple access) technology, SC (single carrier)-FDMA technology, NOMA (non-orthogonal multiple access) technology, GFDM (generalized frequency division multiplexing) technology, FBMC (filter bank multi-carrier) technology, UFMC (universal filtered multi-carrier) technology, SDMA (space division multiple access) technology, etc. Each of the plurality of communication nodes may have the following structure.

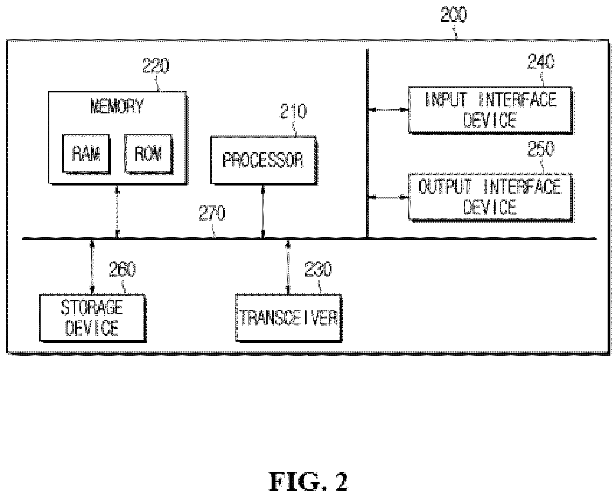

FIG. 2 is a block diagram illustrating a first embodiment of a communication node constituting a communication system.

Referring to FIG. 2, the communication node 200 may include at least one processor 210, a memory 220, and a transmission/reception device 230 connected to a network to perform communication. In addition, the communication node 200 may further include an input interface device 240, an output interface device 250, a storage device 260, etc. Each component included in the communication node 200 may be connected by a bus 270 to perform communication with each other.

The processor 210 may execute a program command stored in at least one of the memory 220 and the storage device 260. The processor 210 may mean a central processing unit (CPU), a graphics processing unit (GPU), or a dedicated processor on which methods according to embodiments of the present disclosure are performed. Each of the memory 220 and the storage device 260 may be composed of at least one of a volatile storage medium and a nonvolatile storage medium. For example, the memory 220 may be composed of at least one of a read only memory (ROM) and a random access memory (RAM).

Referring again to FIG. 1, the communication system 100 may include a plurality of base stations 110-1, 110-2, 110-3, 120-1 and 120-2 and a plurality of terminals 130-1, 130-2, 130-3, 130-4, 130-5 and 130-6. Each of the first base station 110-1, the second base station 110-2, and the third base station 110-3 may form a macro cell. Each of the fourth base station 120-1 and the fifth base station 120-2 may form a small cell. The fourth base station 120-1, the third terminal 130-3, and the fourth terminal 130-4 may be within the cell coverage of the first base station 110-1. The second terminal 130-2, the fourth terminal 130-4, and the fifth terminal 130-5 may be within the cell coverage of the second base station 110-2. The fifth base station 120-2, the fourth terminal 130-4, the fifth terminal 130-5, and the sixth terminal 130-6 may be within the cell coverage of the third base station 110-3. The first terminal 130-1 may be within the cell coverage of the fourth base station 120-1. The sixth terminal 130-6 may be within the cell coverage of the fifth base station 120-2.

Here, each of the plurality of base stations 110-1, 110-2, 110-3, 120-1 and 120-2 may be referred to as a NodeB (NB), an evolved NodeB (eNB), a gNB, an advanced base station (ABS), a high reliability-base station (HR-BS), a base transceiver station (BTS), a radio base station, a radio transceiver, an access point, an access node, a radio access station (RAS), a mobile multihop relay-base station (MMR-BS), a relay station (RS), an advanced relay station (ARS), a high reliability-relay station (HR-RS), a home NodeB (HNB), a home eNodeB (HeNB), a road side unit (RSU), a radio remote head (RRH), a transmission point (TP), a transmission and reception point (TRP), etc.

Each of the plurality of terminals 130-1, 130-2, 130-3, 130-4, 130-5 and 130-6 may be referred to as a user equipment (UE), terminal equipment (TE), advanced mobile station (AMS), high reliability-mobile station (HR-MS), terminal, access terminal, mobile terminal, station, subscriber station, mobile station, portable subscriber station, node, device, OBU (on board unit), etc.

Meanwhile, each of the plurality of base stations 110-1, 110-2, 110-3, 120-1 and 120-2 may operate in a different frequency band or may operate in the same frequency band. Each of the plurality of base stations 110-1, 110-2, 110-3, 120-1 and 120-2 may be connected to each other via an ideal backhaul link or a non-ideal backhaul link, and may exchange information with each other via the ideal backhaul link or the non-ideal backhaul link. Each of the plurality of base stations 110-1, 110-2, 110-3, 120-1 and 120-2 may be connected to a core network via an ideal backhaul link or a non-ideal backhaul link. Each of the plurality of base stations 110-1, 110-2, 110-3, 120-1 and 120-2 may transmit a signal received from the core network to the terminal 130-1, 130-2, 130-3, 130-4, 130-5 and 130-6, and may transmit a signal received from the terminal 130-1, 130-2, 130-3, 130-4, 130-5 and 130-6 to the core network.

In addition, each of the plurality of base stations 110-1, 110-2, 110-3, 120-1 and 120-2 may support MIMO transmission (e.g., single user (SU)-MIMO, multi user (MU)-MIMO, massive MIMO, etc.), coordinated multipoint (CoMP) transmission, carrier aggregation (CA) transmission, transmission in an unlicensed band, sidelink communication (e.g., device to device communication (D2D), proximity services (ProSe)), Internet of Things (IoT) communication, dual connectivity (DC), etc. Here, each of the plurality of terminals 130-1, 130-2, 130-3, 130-4, 130-5 and 130-6 may perform an operation corresponding to the base station 110-1, 110-2, 110-3, 120-1 and 120-2 and an operation supported by the base station 110-1, 110-2, 110-3, 120-1 and 120-2. For example, the second base station 110-2 may transmit a signal to the fourth terminal 130-4 based on the SU-MIMO method, and the fourth terminal 130-4 may receive a signal from the second base station 110-2 by the SU-MIMO method. Alternatively, the second base station 110-2 may transmit signals to the fourth terminal 130-4 and the fifth terminal 130-5 based on the MU-MIMO method, and each of the fourth terminal 130-4 and the fifth terminal 130-5 may receive signals from the second base station 110-2 by the MU-MIMO method.

Each of the first base station 110-1, the second base station 110-2, and the third base station 110-3 may transmit a signal to the fourth terminal 130-4 based on the CoMP method, and the fourth terminal 130-4 may receive a signal from the first base station 110-1, the second base station 110-2, and the third base station 110-3 based on the CoMP method. Each of the plurality of base stations 110-1, 110-2, 110-3, 120-1 and 120-2 may transmit and receive a signal to and from the terminals 130-1, 130-2, 130-3, 130-4, 130-5 and 130-6 within its cell coverage based on the CA method. Each of the first base station 110-1, the second base station 110-2, and the third base station 110-3 may control sidelink communication between the fourth terminal 130-4 and the fifth terminal 130-5, and each of the fourth terminal 130-4 and the fifth terminal 130-5 may perform sidelink communication under the control of the second base station 110-2 and the third base station 110-3.

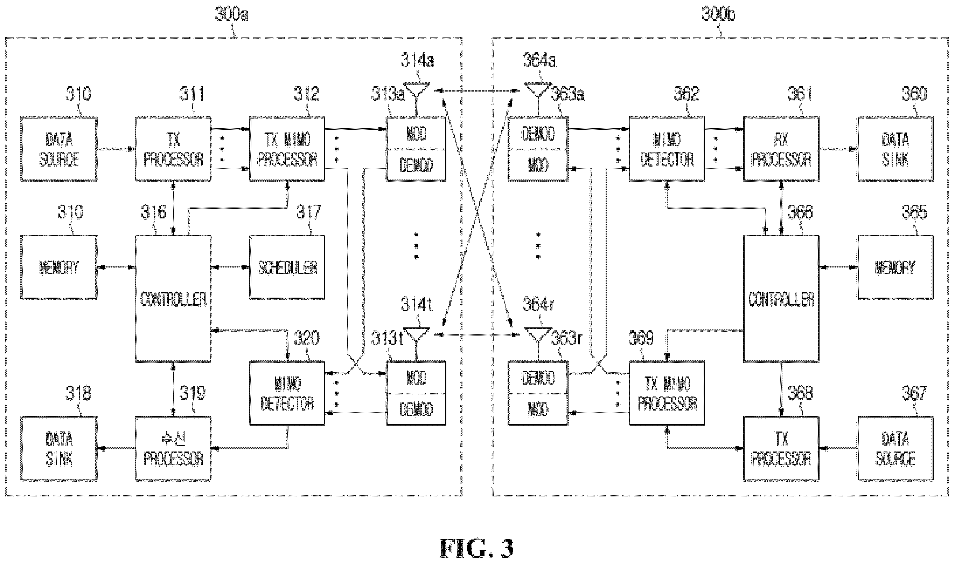

Meanwhile, communication nodes performing communication in the communication network may be configured as follows. The communication node illustrated in FIG. 3 may be a specific embodiment of the communication node illustrated in FIG. 2.

FIG. 3 is a block diagram illustrating a first embodiment of communication nodes performing communication.

Referring to FIG. 3, each of a first communication node 300a and a second communication node 300b may be a base station or a UE. The first communication node 300a may transmit a signal to the second communication node 300b. A transmission processor 311 included in the first communication node 300a may receive data (e.g., a data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may perform a processing operation (e.g., an encoding operation, a symbol mapping operation, etc.) on data to generate data symbol(s). The transmission processor 311 may perform a processing operation (e.g., an encoding operation, a symbol mapping operation, etc.) on control information to generate control symbol(s). In addition, the transmission processor 311 may generate synchronization/reference symbol(s) for a synchronization signal and/or a reference signal.

A Tx MIMO processor 312 may perform a spatial processing operation (e.g., a precoding operation) on data symbol(s), control symbol(s), and/or synchronization/reference symbol(s). Output (e.g., a symbol stream) of the Tx MIMO processor 312 may be provided to modulators (MODs) included in transceivers 313a to 313t. The modulators (MODs) may perform a processing operation on the symbol stream to generate modulation symbols, and may perform an additional processing operation (e.g., an analog conversion operation, an amplification operation, a filtering operation, an up-conversion operation) on the modulation symbols to generate signals. The signals generated by the modulators (MODs) of the transceivers 313a to 313t may be transmitted via antennas 314a to 314t.

The signals transmitted by the first communication node 300a may be received by the antennas 364a to 364r of the second communication node 300b. The signals received by the antennas 364a to 364r may be provided to demodulators (DEMODs) included in the transceivers 363a to 363r. The demodulator (DEMOD) may perform a processing operation (e.g., a filtering operation, an amplification operation, a down-conversion operation, a digital conversion operation) on the signal to obtain samples. The demodulator (DEMOD) may perform an additional processing operation on the samples to obtain symbols. A MIMO detector 362 may perform a MIMO detection operation on the symbols. The reception processor 361 may perform a processing operation (e.g., a deinterleaving operation, a decoding operation) on the symbols. The output of the reception processor 361 may be provided to a data sink 360 and the controller 366. For example, data may be provided to the data sink 360 and control information may be provided to the controller 366.

Meanwhile, the second communication node 300b may transmit a signal to the first communication node 300a. A transmission processor 368 included in the second communication node 300b may receive data (e.g., data unit) from a data source 367 and perform a processing operation on the data to generate data symbol(s). The transmission processor 368 may receive control information from the controller 366 and perform a processing operation on the control information to generate control symbol(s). In addition, the transmission processor 368 may perform a processing operation on a reference signal to generate reference symbol(s).

The Tx MIMO processor 369 may perform a spatial processing operation (e.g., a precoding operation) on data symbol(s), control symbol(s), and/or reference symbol(s). Output (e.g., a symbol stream) of the Tx MIMO processor 369 may be provided to modulators (MODs) included in transceivers 363a to 363t. The modulators (MODs) may perform processing operations on the symbol stream to generate modulation symbols, and may perform additional processing operations (e.g., an analog conversion operation, an amplification operation, a filtering operation, an up-conversion operation) on the modulation symbols to generate signals. The signals generated by the modulators (MODs) of the transceivers 363a to 363t may be transmitted via the antennas 364a to 364t.

The signals transmitted by the second communication node 300b may be received by the antennas 314a to 314r of the first communication node 300a. The signals received by the antennas 314a to 314r may be provided to the demodulators (DEMODs) included in transceivers 313a to 313r. The demodulator (DEMOD) may perform a processing operation (e.g., a filtering operation, an amplification operation, a down-conversion operation, a digital conversion operation) on the signal to obtain samples. The demodulator (DEMOD) may perform an additional processing operation on the samples to obtain symbols. A MIMO detector 320 may perform a MIMO detection operation on the symbols. The reception processor 319 may perform a processing operation (e.g., a deinterleaving operation, a decoding operation) on the symbols. The output of the reception processor 319 may be provided to a data sink 318 and the controller 316. For example, data may be provided to the data sink 318 and control information may be provided to the controller 316.

Memories 315 and 365 may store data, control information, and/or program code. A scheduler 317 may perform a scheduling operation for communication. The processors 311, 312, 319, 361, 368 and 369 and the controllers (316, 366) illustrated in FIG. 3 may be the processor 210 illustrated in FIG. 2 and may be used to perform the methods described in the present disclosure.

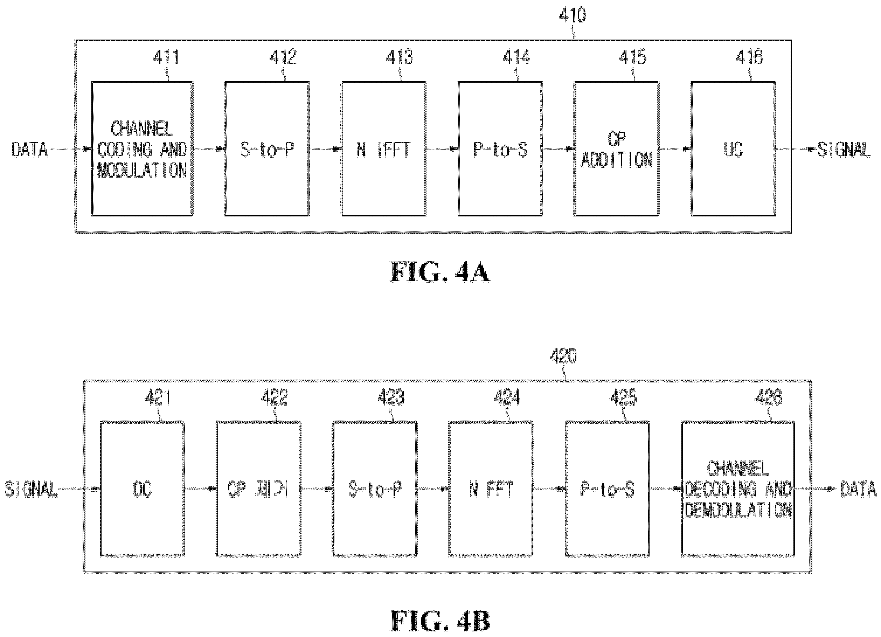

FIG. 4a is a block diagram illustrating a first embodiment of a transmission path, and FIG. 4b is a block diagram illustrating a first embodiment of a reception path.

Referring to FIGS. 4a and 4b, a transmission path 410 may be implemented in a communication node that transmits a signal, and a reception path 420 may be implemented in a communication node that receives a signal. The transmission path 410 may include a channel coding and modulation block 411, an S-to-P (serial-to-parallel) block 512, an N IFFT (Inverse Fast Fourier Transform) block 413, a P-to-S (parallel-to-serial) block 414, a CP (cyclic prefix) addition block 415, and an up-converter (UC) 416. The receiving path 420 may include a down-converter (DC) 421, a CP removal block 422, an S-to-P block 423, an N FFT block 424, a P-to-S block 425, and a channel decoding and demodulation block 426. Here, N may be a natural number.

In the transmission path 410, information bits may be input to the channel coding and modulation block 411. The channel coding and modulation block 411 may perform a coding operation (e.g., low-density parity check (LDPC) coding operation, polar coding operation, etc.) and a modulation operation (e.g., Quadrature Phase Shift Keying (QPSK), Quadrature Amplitude Modulation (QAM), etc.) on the information bits. Output of the channel coding and modulation block 411 may be a sequence of modulation symbols.

The S-to-P block 412 may convert modulation symbols in the frequency domain into parallel symbol streams to generate N parallel symbol streams. N may be an IFFT size or an FFT size. The N IFFT block 413 may perform an IFFT operation on the N parallel symbol streams to generate signals in the time domain. The P-to-S block 414 may convert output (e.g., parallel signals) of the N IFFT block 413 into serial signals to generate serial signals.

The CP addition block 415 may insert CP into a signal. The UC 416 may up-convert the frequency of the output of the CP addition block 415 to an RF (radio frequency) frequency. Additionally, the output of the CP addition block 415 may be filtered at baseband before up-conversion.

A signal transmitted from the transmission path 410 may be input to the reception path 420. The operation in the reception path 420 may be the reverse operation of the operation in the transmission path 410. The DC 421 may down-convert the frequency of the received signal into a frequency of the baseband. The CP removal block 422 may remove the CP from the signal. Output of the CP removal block 422 may be a serial signal. The S-to-P block 423 may convert the serial signal into parallel signals. The N FFT block 424 may perform an FFT algorithm to generate N parallel signals. The P-to-S block 425 may convert the parallel signals into a sequence of modulation symbols. The channel decoding and demodulation block 426 may perform a demodulation operation on the modulation symbols and perform a decoding operation on the result of the demodulation operation to reconstruct data.

In FIGS. 4a and 4b, instead of FFT and IFFT, Discrete Fourier Transform (DFT) and Inverse DFT (IDFT) may be used. In FIGS. 4a and 4b, each of the blocks (e.g., components) may be implemented by at least one of hardware, software, or firmware. For example, in FIGS. 4a and 4b, some of the blocks may be implemented by software, and the remaining blocks may be implemented by hardware or a "combination of hardware and software." In FIGS. 4a and 4b, one block may be subdivided into multiple blocks, multiple blocks may be integrated into one block, some blocks may be omitted, and blocks supporting other functions may be added.

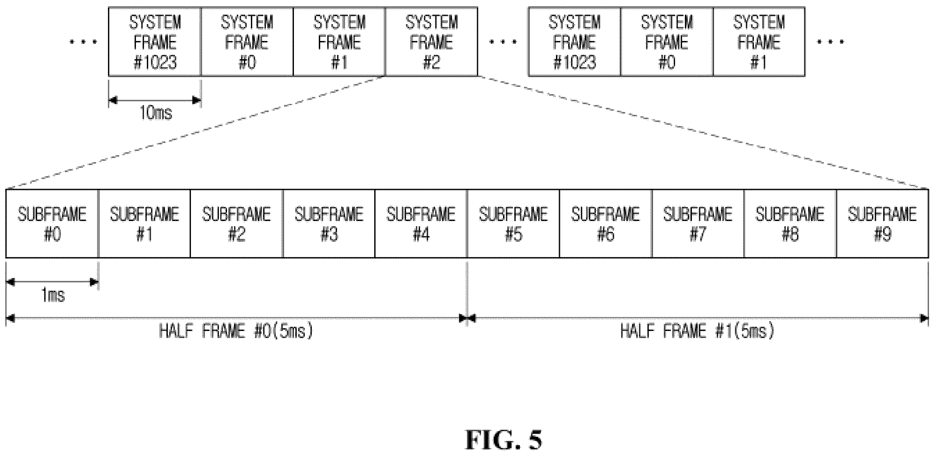

FIG. 5 is a conceptual diagram illustrating a first embodiment of a system frame in a communication system.

Referring to FIG. 5, in a communication system, time resources may be divided in frame units. For example, system frames may be configured sequentially in the time domain of the communication system. The length of a system frame may be 10 ms (milliseconds). A system frame number (SFN) may be set to #0 to #1023. In this case, 1024 system frames may be repeated in the time domain of the communication system. For example, the SFN of a system frame after system frame #1023 may be #0.

One system frame may include two half frames. The length of one half frame may be 5 ms. A half frame located at the start area of the system frame may be referred to as "half frame #0", and a half frame located at the end area of the system frame may be referred to as "half frame #1". A system frame may include 10 subframes. The length of a subframe may be 1 ms. The 10 subframes within a system frame may be referred to as "subframe #0-9".

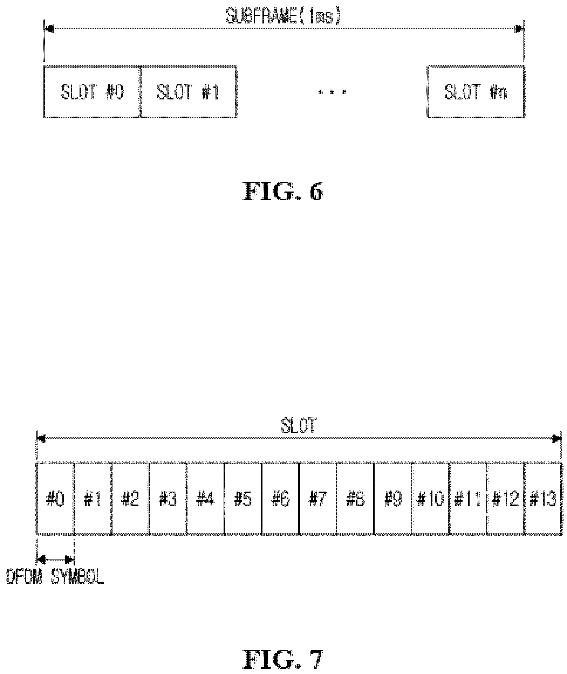

FIG. 6 is a conceptual diagram illustrating a first embodiment of a subframe in a communication system.

Referring to FIG. 6, one subframe may include n slots, where n may be a natural number. Accordingly, one subframe may be composed of one or more slots.

FIG. 7 is a conceptual diagram illustrating a first embodiment of a slot in a communication system.

Referring to FIG. 7, one slot may include one or more symbols. One slot illustrated in FIG. 7 may include 14 symbols. The length of the slot may vary depending on the number of symbols included in the slot and the length of the symbol. Alternatively, the length of the slot may vary depending on the numerology.

The numerology applied to the physical signal and channel in the communication system may vary. The numerology may vary to meet various technical requirements of the communication system. In a communication system to which CP (cyclic prefix)-based OFDM waveform technology is applied, the numerology may include a subcarrier spacing and a CP length (or a CP type). Table 1 may be a first embodiment of a numerology configuration method for a CP-OFDM-based communication system. At least some of the numerologies in Table 1 may be supported depending on the frequency band on which the communication system operates. Additionally, in the communication system, numerology(s) not listed in Table 1 may be further supported.

**[Table 1]**

| Subcarrirer Spacing | 15 kHz | 30 kHz | 60 kHz | 120 kHz | 240 kHz | 480 kHz |
|---|---|---|---|---|---|---|
| Length of OFDM symbol [us] | 66.7 | 33.3 | 16.7 | 8.3 | 4.2 | 2.1 |
| Length of CP [us] | 4.76 | 2.38 | 1.19 | 0.60 | 0.30 | 0.15 |
| The number of OFDM symbols in 1ms | 14 | 28 | 56 | 112 | 224 | 448 |

When the subcarrier spacing is 15 kHz (e.g., µ=0), the length of the slot may be 1 ms. In this case, one system frame may include 10 slots. When the subcarrier spacing is 30 kHz (e.g., µ=1), the length of the slot may be 0.5 ms. In this case, one system frame may include 20 slots.

When the subcarrier spacing is 60 kHz (e.g., µ=2), the length of a slot may be 0.25 ms. In this case, one system frame may include 40 slots. When the subcarrier spacing is 120 kHz (e.g., µ=3), the length of a slot may be 0.125 ms. In this case, one system frame may include 80 slots. When the subcarrier spacing is 240 kHz (e.g., µ=4), the length of a slot may be 0.0625 ms. In this case, one system frame may include 160 slots.

A symbol may be set as a downlink (DL) symbol, a flexible (FL) symbol, or an uplink (UL) symbol. A slot consisting of only DL symbols may be referred to as a "DL slot", a slot consisting of only FL symbols may be referred to as a "FL slot", and a slot consisting of only UL symbols may be referred to as a "UL slot".

The slot format may be semi-fixedly set by higher layer signaling (e.g., RRC signaling). Information indicating the semi-fixed slot format may be included in system information, and the semi-fixed slot format may be set cell-specifically. In addition, the semi-fixed slot format may be additionally set for each terminal through terminal-specific higher layer signaling (e.g., RRC signaling). A flexible symbol of a slot format set cell-specifically may be overridden with a downlink symbol or an uplink symbol by terminal-specific higher layer signaling. In addition, the slot format may be dynamically indicated by physical layer signaling (e.g., a slot format indicator (SFI) included in DCI). A semi-fixedly set slot format may be overridden by a dynamically indicated slot format. For example, a flexible symbol set semi-fixedly may be overridden with a downlink symbol or an uplink symbol by SFI.

A reference signal may be a channel state information-reference signal (CSI-RS), a sounding reference signal (SRS), a demodulation-reference signal (DM-RS), a phase tracking-reference signal (PT-RS), etc. A channel may be a physical broadcast channel (PBCH), a physical downlink control channel (PDCCH), a physical downlink shared channel (PDSCH), a physical uplink control channel (PUCCH), a physical uplink shared channel (PUSCH), a physical sidelink control channel (PSCCH), a physical sidelink shared channel (PSSCH), etc. In the present disclosure, a control channel may mean a PDCCH, a PUCCH, or a PSCCH, and a data channel may mean a PDSCH, a PUSCH, or a PSSCH.

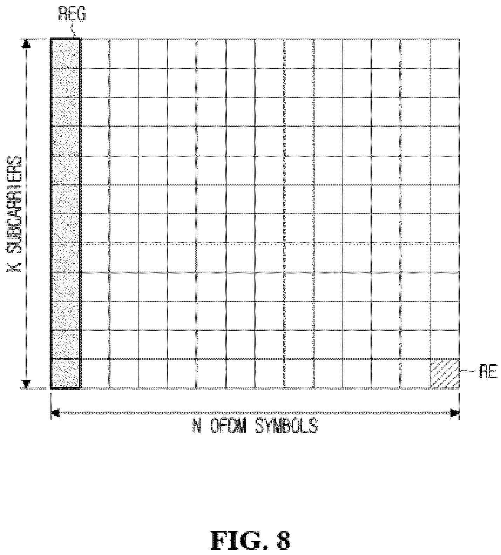

FIG. 8 is a conceptual diagram illustrating a first embodiment of a time-frequency resource in a communication system.

Referring to FIG. 8, a resource consisting of one symbol (e.g., OFDM symbol) in the time domain and one subcarrier in the frequency domain may be defined as a "RE (resource element)". Resources consisting of one OFDM symbol in the time domain and K subcarriers in the frequency domain may be defined as a "REG (resource element group)". A REG may include K REs. The REG may be used as a basic unit of resource allocation in the frequency domain. K may be a natural number. For example, K may be 12. N may be a natural number. In the slot illustrated in FIG. 7, N may be 14. N OFDM symbols may be used as a basic unit of resource allocation in the time domain.

In the present disclosure, a RB may mean a CRB (common RB). Alternatively, the RB may mean a PRB or a VRB (virtual RB). In a communication system, the CRB may mean a RB constituting a set of consecutive RBs (e.g., common RB grid) based on a reference frequency (e.g., point A). Carriers and/or bandwidth portions may be arranged on the common RB grid. That is, the carrier and/or bandwidth portion may be composed of CRB(s). RBs or CRBs constituting the bandwidth portion may be referred to as PRBs, and a CRB index within the bandwidth portion may be appropriately converted into a PRB index.

Downlink data may be transmitted through a PDSCH. A base station may transmit configuration information (e.g., scheduling information) of a PDSCH to a terminal through a PDCCH. The terminal may obtain the configuration information of the PDSCH by receiving a PDCCH (e.g., downlink control information (DCI)). For example, the configuration information of the PDSCH may include MCS (modulation coding scheme) used for transmission and reception of the PDSCH, time resource information of the PDSCH, frequency resource information of the PDSCH, feedback resource information for the PDSCH, etc. The PDSCH may mean a radio resource through which downlink data is transmitted and received. Alternatively, the PDSCH may mean downlink data itself. The PDCCH may mean a radio resource through which downlink control information (e.g., DCI) is transmitted and received. Alternatively, the PDCCH may mean downlink control information itself.

The terminal may perform a monitoring operation for the PDCCH in order to receive the PDSCH transmitted from the base station. The base station may inform the terminal of the configuration information for the monitoring operation of the PDCCH using a higher layer message (e.g., an RRC (radio resource control) message). The configuration information for the monitoring operation of the PDCCH may include CORESET (control resource set) information and search space information.

CORESET information may include PDCCH DMRS (demodulation reference signal) information, PDCCH precoding information, PDCCH occasion information, etc. The PDCCH DMRS may be a DMRS used to demodulate the PDCCH. The PDCCH occasion may be an area where the PDCCH may be present. That is, the PDCCH occasion may be an area where DCI may be transmitted. The PDCCH occasion may be referred to as a PDCCH candidate. The PDCCH occasion information may include time resource information and frequency resource information of the PDCCH occasion. The length of the PDCCH occasion in the time domain may be indicated in symbol units. The size of the PDCCH occasion in the frequency domain may be indicated in RB units (for example, in PRB (physical resource block) units or CRB (common resource block) units).

The search space information may include a CORESET ID (identifier) associated with the search space, a period of PDCCH monitoring, and/or an offset. Each of the period of PDCCH monitoring and the offset may be indicated in slot units. In addition, the search space information may further include an index of a symbol at which a PDCCH monitoring operation starts.

The base station may configure a BWP (bandwidth part) for downlink communication. The BWP may be configured differently for each terminal. The base station may inform the terminal of the configuration information of the BWP using upper layer signaling. The upper layer signaling may mean "transmission operation of system information" and/or "transmission operation of RRC (radio resource control) message." The number of BWPs configured for one terminal may be 1 or more. The terminal may receive the configuration information of the BWP from the base station, and may identify the BWP(s) configured by the base station based on the configuration information of the BWP. When a plurality of BWPs are configured for downlink communication, the base station may activate one or more BWPs among the plurality of BWPs. The base station may transmit the configuration information of the activated BWP(s) to the terminal using at least one of upper layer signaling, MAC (medium access control) CE (control element), or DCI. The base station may perform downlink communication using the activated BWP(s). The terminal may identify the activated BWP(s) by receiving configuration information of the activated BWP(s) from the base station, and perform a downlink reception operation in the activated BWP(s).

Meanwhile, in 5G NR, the Multiple Transmission and Reception Point (MTRP) technology refers to a technique in which a base station (e.g., gNB) communicates with a terminal by utilizing multiple transmission reception points (TRPs) that are physically separated. The MTRP technology may solve the problem of reduced quality-of-service (QoS) when a terminal located at the cell edge is far from the base station by utilizing multiple TRPs, and at the same time solve the problem of inter-cell interference received from base stations located in different cells. In addition, the MTPR technology may play a role in providing an additional communication path, which is a non-line-of-sight (NLOS) path, from the base station in cases where the line-of-sight (LOS) path from the base station is limited, such as in the millimeter wave band.

In the current standard, MTRP technology is divided into Coherent Joint Transmission (CJT) and Non-Coherent Joint Transmission (NCJT). In the CJT method, based on a stable backhaul link between a TRP and a connected base station, and two or more TRPs may support data transmission to a single terminal by cooperating with each other in a synchronized manner. On the other hand, the NCJT method is a method that determines scheduling, precoding matrix selection, modulation, and coding schemes without cooperation between the TRPs in a situation where two or more TRPs support a single terminal.

The definition of beam management for TRP in 5G NR may be defined as a set of L1/L2 procedures that find or maintain an optimal beam required for transmission/reception of each TRP and terminal. The beam management procedures may be broadly classified into four types as follows.
1) beam determination
2) beam measurement
3) beam reporting
4) beam sweeping

Here, the TRP and the UE may utilize the reciprocity characteristics of downlink (DL)/uplink (UL) channels during beam management. For example, the UE may utilize the values measured at the receive (Rx) beams of the DL channel when configuring the transmit (Tx) beam. In addition, the UE may utilize the values measured at the transmit (Tx) beams of the UL channel when configuring the receive (Rx) beam. Even in the case of the base station, these procedures for configuring the transmit beam and the receive beam may be performed in the same manner as in the UE. In particular, a transmission configuration indicator (TCI) has been introduced for beam management related to analog beamforming. The TCI may be used to configure a beam to be used for transmission of a specific channel and/or signal, for example, a PDSCH and/or CSI-RS and/or a PDCCH. The base station may dynamically indicate quasi-colocation (QCL) information to the UE by transmitting TCI through downlink control information (DCI).

3GGP Rel-17 introduced a TCI configuration method utilizing a unified TCI pool, or in other words, a unified TCI framework, to reduce signaling overhead for QCL configuration of DL and/or UL channels and to simplify multi-beam operation compared to previous releases of 3GGP Rel-16.

According to the unified TCI framework, the base station may pre-configure a common TCI pool that may be commonly used (or applied) to DL channels and UL channels through RRC signaling. In addition, according to the unified TCI framework, the base station may directly indicate the TCI for DL channels and UL channels in the configured common TCI pool using the medium access control (MAC) control element (CE) (MAC-CE)/downlink control information (DCI). In addition, according to the unified TCI framework, the base station may support update for the common TCI state.

The common TCI state may be indicated (or set) for multiple component carriers (CCs). A reference CC among the multiple CCs may be additionally set, and TCI updates for other CCs within the indicated list may be performed simultaneously through a TCI update command for the reference CC.

At this time, there may be three methods for configuring the TCI state for DL channels and UL channels.
A. Joint TCI state indication method that commonly indicates DL/UL channels
B. DL channel separate TCI state indication method that sets TCI separately for DL channels, and
C. UL channel separate TCI state indication method

Looking at the above three methods from a broader perspective, they may be divided into a joint TCI state indication method that commonly indicates the DL channel and the UL channel, and a separate TCI state indication method that separately sets the TCI for each DL channel or UL channel. The fundamental difference between the above two division methods may be whether or not there is reciprocity between the DL channel and the UL channel.

The Unified TCI framework was designed to target a single TRP (sTRP) in 3GPP Rel-17. However, it is targeted to expand to a multi-TRP (mTRP) system in 3GPP Rel-18.

In the RAN1 #105-e/106-e meeting of Rel-17, it was agreed on how to configure the TCI state pools configured by RRC for each CC/BWP. In other words, it was agreed to use a method of configuring a TCI state pool for each CC and transferring the TCI state pool information for each CC to a terminal, and a method of configuring a TCI state pool only for the reference CC/BWP and using the TCI pool allocated for the reference CC/BWP without change for the remaining CC/BWPs. Based on the above agreement, the TCI pool maybe configured using the above two methods.

Also, for Rel-18, considering MTRP, it was agreed in the RAN#110 meeting that up to 4 TCI states may be activated for each CC/BWP or set. This is a number considering that the maximum number of TRPs that may be supported by a terminal is 2. This will be described with reference to the attached drawing.

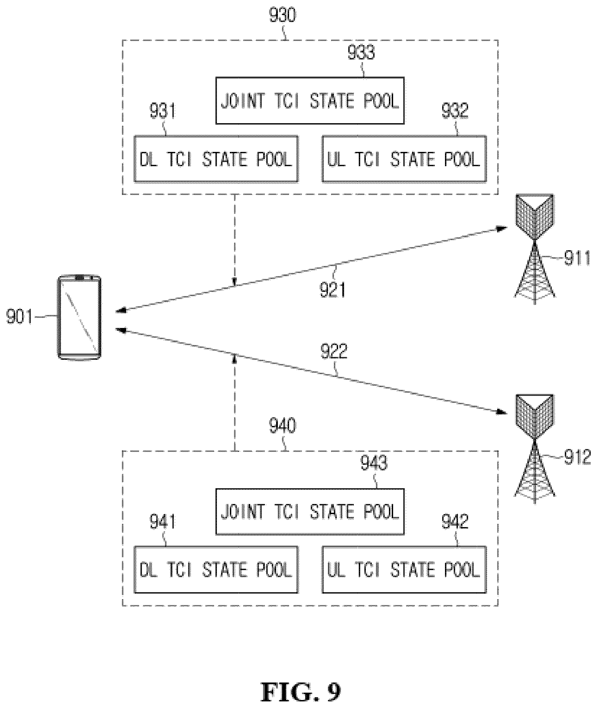

FIG. 9 is a conceptual diagram illustrating a TCI state indication for a single CC/BWP in a state where a UE is connected to an MTRP.

Referring to FIG. 9, a user equipment (UE) 901, a first TRP 911, and a second TRP 912 are illustrated. The UE 901 may perform bidirectional (DL and UL) communication using a first TRP 911 and a first channel 921, and may perform bidirectional (DL and UL) communication using a second TRP 912 and a second channel 922. At this time, when the UE 901 communicates with the first TRP 911 and the second TRP 912 simultaneously, CJT-type communication or NCJT-type communication may be performed.

FIG. 9 illustrates a first TCI state pool 930 that may be used in the first channel 921. The first TCI state pool 930 may be a TCI state pool corresponding to a first channel established between the UE 901 and the first TRP 911. When a separated TCI state pool is used, the first TCI state pool 930 for the first channel 921 established between the UE 901 and the first TRP 911 may include a DL TCI state pool 931 and a DL TCI state pool 932. Additionally, when a joint state pool is used, the first TCI state pool 930 for the first channel 921 established between the UE 901 and the first TRP 911 may include only a joint TCI state pool 933. Therefore, the first TCI state pool 930 may be composed of a DL TCI state pool 931 and a DL TCI state pool 932 or may be composed of a joint TCI state pool 933. In other words, it should be noted that the first TCI state pool 930 is not composed of all of the DL TCI state pool 931, the DL TCI state pool 932 and the joint TCI state pool 933.

FIG. 9 illustrates a second TCI state pool 940 that may be used in the second channel 922. The second TCI state pool 940 may be a TCI state pool corresponding to a second channel established between the UE 901 and the second TRP 912. When a separated TCI state pool is used, a second TCI state pool 940 for the second channel 922 established between the UE 901 and the second TRP 912 may include a DL TCI state pool 941 and a DL TCI state pool 942. Also, when a joint state pool is used, the second TCI state pool 940 for the second channel 922 established between the UE 901 and the second TRP 912 may include only a joint TCI state pool 943. Therefore, the second TCI state pool 940 may be composed of the DL TCI state pool 941 and the DL TCI state pool 942 or may be composed of the joint TCI state pool 943. In other words, it should be noted that the second TCI state pool 940 is not composed of all of the DL TCI state pool 941, the DL TCI state pool 942 and the joint TCI state pool 943.

The UE 901 may activate up to four TCI states as described above. In other words, the UE 901 may include the DL TCI state pool 931 and the UL TCI state pool 932 for the first channel 921 with the first TRP 911, and may include the DL TCI state pool 941 and the UL TCI state pool 942 for the second channel 922 with the second TRP 911.

In other words, in FIG. 9, in the case of separated TCI types, for each of the two TRPs, a DL TCI state 931 and a UL TCI state 932 may be activated for the first TRP 911, and a DL TCI state 941 and a UL TCI state 942 may be activated for the second TRP 912. As a result, four TCI states may be activated in the UE 901.

However, activation and update of the current TCI state do not consider the panel of the UE. However, according to the standard after Rel-17, the base station and the UE may report the measurement results of the channel for beam management in units of panels, and even in UL transmission, such as STxMO, the UE may transmit the UL channel using the panel supported by the UE at the same time. Therefore, a technology for configuring the TCI state considering the panel in the UE is additionally required.

Therefore, the present disclosure described below will describe a unified TCI framework before Rel-17, which targets a single TRP, and a TCI configuration/indication method considering multiple panels on the MTRP environment and the UE side. The unified TRI framework may be largely divided into three procedures.

Step 1: The base station may transmit candidates for the TCI state, for example, DL/UL/Joint state list, indicating QCL/spatial relation information for DL channels and UL channels on the UE side, via RRC. At this time, the TCI state transmitted via RRC may be transmitted by CC or CC group via reference CC.

Step 2: The base station may instruct the UE to activate some TCI states that may be used by the target channel and RS among the lists by mapping them to codepoints via a MAC-CE in a UE-specific manner. In other words, the base station may activate the TCI state to be used on a specific channel to be communicated.

Step 3: The base station may indicate a specific TCI state to the UE for a target channel, such as a PDSCH, via DCI.

The three-step procedure described above may be simplified into two procedures depending on the situation/condition. For example, the TCI state may be indicated (or set) to the UE by performing only steps 1 and 2. As another example, the TCI state may be indicated (or set) to the UE by performing only steps 1 and 3.

The present disclosure described below will describe a unified TCI framework suitable for a terminal having multiple panels when utilizing all or some of the three-step procedures above.

### TCI status pool configuration

The base station may determine a TCI state that may be indicated (or set) to the UE. Then, the base station may transmit the determined TCI state information to the UE through RRC. At this time, the base station may preconfigure the TCI state for the joint TCI state or the separated TCI state in the serving cell configuration, and transmit the configuration information to the UE.

When a joint TCI state is used, the UE may use a TCI state pool that may be used for DL channel transmission when transmitting an UL channel. On the other hand, when a separated TCI state is used, the base station shall separately configure a TCI state pool for a separate UL channel through a UE specific configuration for UL BWP. Then, the base station may transmit the TCI state pool information configured for the UL channel to the UE. In this case, the base station may configure the TCI pool for the UL channel of the UE without considering the terminal panel.

When the UE has actually multiple panels, the panels included in the UE may be placed in different locations. Since the panels included in the UE have different locations, each link between each panel of the UE and one TRP may have a different channel quality. Therefore, when configuring a pool for a TCI state in the base station, it is necessary to configure a TCI state pool that consider the panels of the UE.

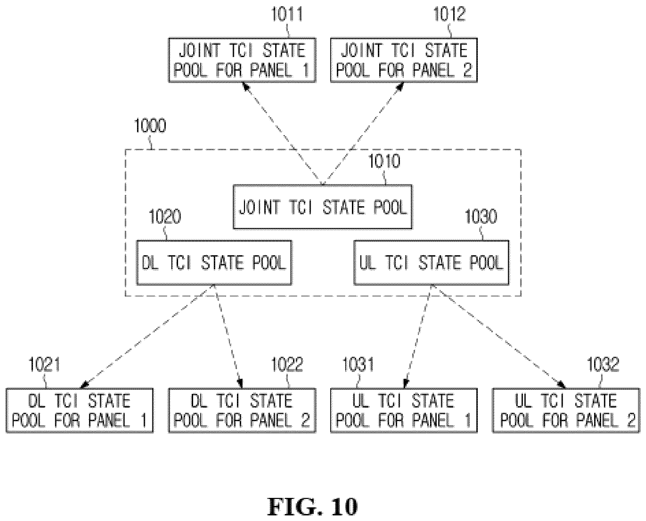

FIG. 10 is a conceptual diagram explaining a TCI state pool configuration considering panels of a UE.

Before referring to FIG. 10, a base station may know the panel number information of a UE. The base station may request UE capability information from the UE using a UE Capability Information enquiry message. In response to the request for the UE capability information, the UE may transmit its capability information (UE Capability Information) to the base station. At this time, the UE capability information may include information such as the number of panels the UE has, the number of ports, the number of layers, and delay. Based on this, the base station may obtain the panel number information of the UE. In addition, the base station may configure multiple TCI state pools based on the obtained panel number information of the UE. The base station may transmit TCI state pool information configured for each of the multiple panels to the UE.

Referring to FIG. 10, as described above in FIG. 9, a TCI state pool 1000 may be composed of a joint TCI state pool 1010 or may be composed of a DL TCI state pool 1020 and a UL TCI state pool 1030. In other words, it should be noted that the TCI state pool 1000 is not composed of all of the j oint TCI state pool 1010, the DL TCI state pool 1020 and the UL TCI state pool 1030.

First, when the joint TCI state indication is set, the base station may divide the joint TCI state pool 1010 into a joint TCI state pool 1011 for panel 1 and a joint TCI state pool 1012 for panel 2 and transmit TCI state pool information to the UE.

On the other hand, when a separated TCI state is set, the base station may transmit DL TCI state pool 1020 information to the UE. At this time, the DL TCI state pool 1020 information may include DL TCI state pool 1021 information for panel 1 and DL TCI state pool 1022 information for panel 2. In addition, the base station may transmit UL TCI state pool 1030 information to the UE. At this time, the UL TCI state pool 1030 information may include UL TCI state pool 1031 information for panel 1 and UL TCI state pool 1032 information for panel 2. In other words, when the TCI type indicates a separated TCI state and the UE has two Rx/TX panels, the base station may configure DL TCI state pools and DL TCI state pools for each of the panels and transmit them to the UE.

When a separated TCI state is set, the base station shall distinguish TCI state pools 1021 and 1022 for each panel in the DL TCI state pool 1020, and shall distinguish TCI state pools 1031 and 1032 for each panel in the UL TCI state pool 1030. Accordingly, each of the state pools may be mapped to TCI state pools in descending order of the panel index.

This index mapping will be described as an example. Assume that the first panel index of the UE is "0" and the second panel index of the UE is "1". Also, assume that the index of the DL TCI state pool 1021 information for the first panel of the DL TCI state pool 1020 is "00" and the index of the DL TCI state pool 1022 for the panel of the DL TCI state pool 1020 is "01". Also, assume that the index of the UL TCI state pool 1031 information for the first panel of the UL TCI state pool 1030 is "10" and the index of the DL TCI state pool 1022 for the second panel of the UL TCI state pool 1030 is "11".

Then, the first panel and the DL TCI state pool 1021 for the first panel may be mapped to "000". In addition, the second panel and the TCI state pool 1022 for the second panel may be mapped to "001". In the same manner, the first panel and the UL TCI state pool 1031 for the first panel may be mapped to "010", and the second panel and the UL TCI state pool 1032 for the second panel may be mapped to "111". The index mapping using 3 bits has been described above. However, if there are two panels of the UE, they may be mapped to 2 bits if it is agreed in advance between the base station and the UE to sort them in descending order of the panel index.

Alternatively, an identifier (ID) may be assigned to each panel, and the ID and TCI state pools may be mapped. It should be noted that the mapping of the panels of the UE described above and the TCI state pools for each of the UL channel and DL channel is only an example, and the present disclosure is not limited thereto.

On the other hand, when transferring a single TCI state pool to the UE as before, the base station (or UE) may be expected to perform reception or transmission without distinguishing the TCI state pool by panel. Therefore, when the base station transmits multiple TCI state pools to the UE, the base station (or UE) may be expected to apply the TCI state to the target channel by panel.

Meanwhile, the base station may configure a joint TCI state pool for a specific panel and a separated TCI state pool for another panel. For example, the base station may configure a joint TCI state pool for a first panel of the UE and a separated TCI state pool for a second panel of the UE.

The TCI states described in the present disclosure may also be supported in the case of carrier aggregation (CA) and/or dual connectivity (DC). In the case of CA and/or DC, the base station may activate or deactivate the TCI state for the serving cell and/or CCs through a single signaling using a MAC-CE. The base station providing the CA and/or DC service shall transmit to the UE a combination of serving cells for activating or deactivating the TCI state for the serving cell and/or CCs through a single signaling. In this case, the combination of serving cells may be written as a single list, as shown in Table 2 below.

**[Table 2]**

| |
|---|
| simultaneousU-TCI-UpdateList1, |
| simultaneousU-TCI-UpdateList2, |
| simultaneousU-TCI-UpdateList3, |
| simultaneousU-TCI-UpdateList4 |

Each of "simultaneousU-TCI-UpdateList1", "simultaneousU-TCI-UpdateList2", "simultaneousU-TCI-UpdateList3" and "simultaneousU-TCI-UpdateList4" may include one or more cell groups. For example, each of the lists may be mapped 1:1 with a master cell group and/or secondary cell groups. Accordingly, each list may include only one cell or may contain two or more cells.

When activation or deactivation of the TCI state is indicated via the MAC-CE for one serving cell ID included in one of the lists shown in Table 2, the activation or deactivation of the TCI state of other serving cells included in the list may also be performed.

The lists shown in Table 2 may be configured regardless of the number of panels included in the UE. For example, a suitable serving cell may differ between the panels of the UE. This is because the locations of the panels included in the UE are different, and each panel may have a different serving cell due to geographical location or obstacles in the communication path. Accordingly, the list of serving cells shown in Table 2 may also need to be configured for each panel. In other words, a list for a combination of serving cells may be needed for each panel of the UE.

The present disclosure proposes a method for providing a list of combinations of serving cells for each panel. According to one embodiment of the present disclosure, a set of lists for each panel may be additionally configured separately. In other words, unlike Table 2, which is configured as List #1, List #2, List #3, and List #4, one list may be additionally configured for each panel.

For example, a list of combinations of serving cells for panel 1 and a list of combinations of serving cells for panel 2 may be configured as shown in Table 3 below.

**[Table 3]**

| | |
|---|---|
| List of serving cells for panel 1 | simultaneousU-TCI-UpdateList #1_1, |
| | simultaneousU-TCI-UpdateList #1_2, |
| | simultaneousU-TCI-UpdateList #1_3, |
| | simultaneousU-TCI-UpdateList #1_4 |
| List of serving cells for panel 2 | simultaneousU-TCI-UpdateList #2_1, |
| | simultaneousU-TCI-UpdateList #2_2, |
| | simultaneousU-TCI-UpdateList #2_3, |
| | simultaneousU-TCI-UpdateList #2_4 |

As shown in Table 3 above, by separately configuring the serving cell list for each panel, the UE has the advantage of being able to manage the serving cell for each panel. In addition, the base station may transmit TCI state pool information to each UE via RRC. At this time, the TCI state pool information transmitted via RRC may be individually configured TCI state pool information for all CCs, or may be one reference CC and its corresponding TCI state pool information for each list of TCI state pools. When one reference CC and its corresponding TCI state pool information are transmitted for each list of TCI state pools, if the state of the reference CC is changed, it may be applied to all CCs included in the list.

When the base station provides TCI state pool information to each UE as described above, the current standard does not consider the panel of the UE. Therefore, the present disclosure provides a method of considering the panel of the UE in the TCI state pool information.

According to the present disclosure, when one reference CC is configured for each TCI state pool list, different reference CCs may be configured for each panel included in the UE. This will be described as an example. Assume that the UE has two transmit/receive panels, and that the CCs of "simultaneousU-TCI-UpdateList#1_1" and "simultaneousU-TCI-UpdateList#2_1" configured for each panel are all the same. Assume that there are four CCs included in each of "simultaneousU-TCI-UpdateList#1_1" and "simultaneousU-TCI-UpdateList#2_1", and that these are a first CC, a second CC, a third CC, and a fourth CC, respectively.

Under this assumption, the base station may configure the first CC as a reference CC for the first panel of the UE, and may configure the third CC as a reference CC for the second panel. In other words, the base station may subgroup the CCs included in one list, or configure a reference CC for each panel for each of the entire CCs to the UE.

In the above example, it is assumed that the CCs included in the serving cell list configured for each panel are the same. However, if different CCs are included for each panel, it will be obvious that the reference CCs may be different. If the subgroups are different for each panel, the base station may link the subgroups and the panels by including panel index information for each subgroup. The reason for configuring the reference CCs differently for each panel is that the target TRP may be different for each panel, or the link with the target TRP may be mutually independent.

As described above, when using a reference CC, the base station may change the TCI state of one reference CC to update the TCI states of other CCs in the group including the reference CC. This has the advantage of reducing signaling overhead on the base station side.

On the other hand, there is a problem that the flexibility to control the TCI state for each CC is reduced. If the base station transmits all the TCI states for each CC to the UE in order to secure the flexibility of controlling the TCI state for each CC, the signaling overhead is very large and thus the base station may divide the entire CC group into a predetermined number of subgroups, for example, M subgroups. Then, the base station may configure a reference CC for each of the M subgroups and transmit it to the UE. Using this method, both the signaling overhead and flexibility may be secured. Therefore, it is necessary to set an appropriate value for the M subgroups from the viewpoint of the trade-off between the signaling overhead and flexibility. At this time, the M subgroups may be configured regardless of the number of panels of the UE described in the present disclosure.

In addition, the list of serving cells described above may also include non-serving cells that are not serving cells. The reason for including non-serving cells is that in 3GPP Rel-17, inter-cell channels may be managed not only through SSB but also through CSI-BM for beam management.

### TCI state activation and indication

Next, the base station may activate or deactivate the configured TCI state. In other words, the TCI state may be activated or deactivated for all of multiple CCs or for a subgroup including multiple CCs. In addition, a specific CC and/or BWP may be indicated in the activated subgroup. Even in this case, the current standard does not allow activation or deactivation for each panel included in the UE. Therefore, there is a need for a method for activating or deactivating the TCI state for each panel.

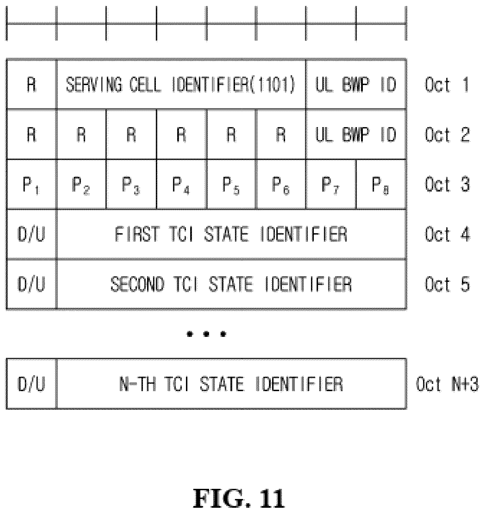

FIG. 11 is a conceptual diagram illustrating a MAC CE for activating and deactivating a TCI state when using a unified TCI pool.

Referring to FIG. 11, there may be an example of a configuration of a MAC CE. The MAC CE has 8 bits as one octet (Oct) and may be composed of multiple octets (Oct). FIG. 11 shows an example of a case composed of N+3 octets.

Bits indicated as R in the MAC CE are reserved bits and may be set to "zero (0)". A serving cell identifier 1101 in Oct 1 is a field indicating an identifier (ID) of a serving cell to which the MAC CE is applied and may have a length of 5 bits as illustrated in FIG. 11. If the serving cell identifier 1101 is included in at least one of simultaneousU-TCI-UpdateList1, simultaneousU-TCI-UpdateList2, simultaneousU-TCI-UpdateList3, or simultaneousU-TCI-UpdateList4 of RRC described above, the contents specified in the MAC CE illustrated in FIG. 11 may be applied to all serving cells included in the corresponding list.

A DL BWP ID 1102 located at the end of Oct 1 has a length of 2 bits as illustrated in FIG. 11, and may mean a DL BWP to which the MAC CE illustrated in FIG. 11 is applied as a codepoint of the "bandwidth part indicator" field of DCI.

A UL BWP ID 1103 located at the end of Oct 2 has a length of 2 bits as illustrated in FIG. 11, and may mean a UL BWP to which the MAC CE illustrated in FIG. 11 is applied as a codepoint of the "bandwidth part indicator" field of DCI.

Each of P₁ to P₈ described in Oct 3 is a field indicating whether the TCI codepoint has multiple TCI states or a single TCI state. For example, if Pᵢ is set to '1', it may mean that the i-th TCI code point includes both a DL TCI state and a UL TCI state, and if Pᵢ is set to '0', it may mean that the i-th TCI codepoint includes only one of the DL TCI state or the UL TCI state.

A D/U field, which is the first bit of Oct 4 to Oct N+3, may indicate whether the TCI state ID within the same octet is a TCI state identifier for joint/downlink or an uplink TCI state identifier. For example, if the D/U field is set to '1', it may mean that the TCI state identifier within the corresponding octet is set to joint/downlink, and if the D/U field is set to '0', it may mean that the TCI state identifier within the corresponding octet is set for uplink.

Each of the first to N-th TCI state identifiers represents a TCI state identifier specified in RRC, and when D/U is set to '1', it may mean a TCI state identifier with a length of 7 bits defined in RRC, and when D/U is set to '0', the most significant bit of the TCI state identifier is regarded as a reserved bit, and the remaining 6 bits may mean a TCI state identifier defined in RRC. At this time, according to the standard of 3GPP Rel-17, the maximum number of activated TCI states may be 16. Therefore, the maximum value of N shown in FIG. 11 may be 16.

According to the example described with reference to FIG. 11, the base station may indicate to the UE activation or deactivation of a single serving cell through the MAC-CE. In other words, the base station may indicate to the UE activation/deactivation of multiple serving cells included in the 'simultaneousU-TCI-UpdateList1' field defined in RRC at once by using the MAC CE illustrated in FIG. 11.

However, it can be seen that the activation/deactivation method described in FIG. 11 also does not consider the case where the UE has multiple panels. Therefore, when the UE has multiple transmit/receive panels, an activation/deactivation method for the TCI state using the MAC-CE for different panels is required.

According to one embodiment of the present disclosure, a method of indicating activation/deactivation for each panel is proposed.

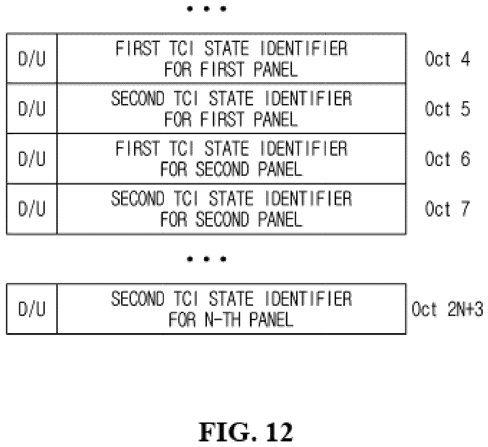

FIG. 12 is a conceptual diagram illustrating a part of a MAC CE for activating and deactivating a TCI state for each panel when using a unified TCI pool.

FIG. 12 may have a form that is changed from octet 4 described in FIG. 11 above. Therefore, it should be noted that octets 1 to 3 have the same form as FIG. 11 and are therefore not illustrated in FIG. 12.

According to the present disclosure, octet 4 may include a D/U field and a first TCI state identifier for a first panel. The D/U field may be configured in the same manner as described above in FIG. 11. In addition, the remainder of octet 4 includes a first TCI state identifier for the first panel of the UE. In addition, octet 5 may include a first TCI state identifier for a second panel of the UE. Accordingly, although FIG. 11 does not provide information about each panel of the UE, the present disclosure may transfer activation/deactivation for each panel of the UE to the UE using one MAC CE.

FIG. 12 is only an example, and may include the same information as FIG. 12, but the order may be changed. For example, the TCI state identifiers for the first panel of the UE may be listed sequentially as in FIG. 11, and then the TCI state identifiers for the second panel of the UE may be listed.

Meanwhile, the method shown in FIG. 12 may be used when the TCI state is always activated/deactivated at the same time for each panel. If it is desired to activate/deactivate only specific TCI states of different panels at different times, a method of distinguishing the panels may be required. The reason why the panels need to be distinguished is that there may be cases where the serving cells of the panels are the same. In other words, when the serving cells are different for each panel, the UE may communicate with each base station (or TRP) for each panel. At this time, each panel of the UE may communicate with the base station (or TRP) using CCs belonging to each BWP. However, if both panels communicate with the same base station (or TRP), the communication may be made in the same BWP. Therefore, if there is a need to change the TCI state for only one panel, a method of indicating the corresponding panel may be required.

As illustrated in FIG. 12, if the UE uses only two panels, the two panels may be identified using 1 bit. For example, the first panel may be assigned '0' as an index, and the second panel may be assigned '1' as an index. If the UE uses three or more panels, the index may have 2 bits. In this case, at least one bit of the reserved (R) bits illustrated in Octet 1 or Octet 2 in FIG. 11 may be defined to indicate activation or deactivation, thereby indicating activation or deactivation of a specific panel.

As another example, 2 bits among the reserved bits illustrated in FIG. 11 may be used to indicate activation/deactivation of the TCI state. For example, assume that the first and second reserved bits among the reserved (R) bits illustrated in Octet 2 are used. Then, as one embodiment using 2 bits, the TCI state may be defined as in Table 4 below.

**[Table 4]**

| Bit | Definition |
|---|---|
| 00 | Previous state is maintained without TCI state for all panels |
| 01 | Activation/deactivation of TCI state for first panel |
| 10 | Activation/deactivation of TCI state for second panel |
| 11 | Activation/deactivation of TCI state for both panels |

At this time, the value of '01' among the TCI states utilizing 2 bits may be activated/deactivated by referencing the TCI state pool corresponding to the first panel as described in the TCI state pool configuration method above, and the value of '10' may be activated/deactivated by referencing the TCI state pool corresponding to the second panel as described in the TCI state pool configuration method above.

### Switch on/off between multiple panels and single panel

The present disclosure describes a method of controlling on/off such that a UE having two or more panels, that is, a UE having multiple panels, uses multiple panels, or uses a single panel.

According to the present disclosure, the base station may dynamically indicate activation/deactivation of panel(s) included in the UE according to the channel situation. In addition, the base station may configure (or indicate) a TCI state after indicating activation/deactivation of the panel(s) of the UE. The method by which the base station indicates activation/deactivation of the panel(s) of the UE may use a MAC-CE or DCI.

First, the case where the MAC-CE is used will be described. When the base station indicates activation/deactivation of the panel(s) of the UE using the MAC-CE, the method described in the TCI state activation and indication method may be used. For example, when 2 bits are used to indicate activation or deactivation of the TCI state of a specific panel, '01' or '10' may be indicated as in Table 4. At this time, when the TCI state for a specific panel is deactivated, it may be implicitly defined as using only one panel. When defined in this way, the UE may perform on/off of a specific panel based on information shown in Table 4. In other words, since it is defined to use only one panel, the UE may expect that only the TCI state for one panel will be applied when transmitting/receiving a channel using only a single panel thereafter.

Alternatively, the base station may indicate to the UE using of a single or multiple panels via DCI. In this case, the reserved bit(s) of the DCI may be used, or in cases where resource allocation is unnecessary, some of the bits defined as resource allocation may be defined as being used as on/off of the panel.

If the base station provides panel on/off information using DCI, one reserved bit may be used. For example, '0' may indicate the use of a single panel, and '1' may indicate the use of all panels. Therefore, if the panel on/off information in DCI is set to '1', it may be expected that the related TCI state(s) will be used according to the codepoint(s).

Codepoint(s) indicating the TCI state may be included in DCI, and the number of codepoints may be equal to the number N of panels available to the UE. Therefore, the number of panels and codepoint(s) may be mapped 1:1. At this time, the bit indicating the codepoint included in DCI and the bit indicating the on/off switch of the panel may be explicitly indicated (or set) by being separated into different bit areas.

The methods described above may be applied not only to the framework of the unified TCI, but also to the framework of the general TCI state. In addition, some or all of the methods described above may be commonly applied to a single UE regardless of the panel.

In addition, in the above description, a case where the UE has two panels is assumed. However, based on the contents described in the present disclosure, it may be extended and applied to a case where the UE has three or more transmit/receive panels.

### Example of entire operation

An operation between a UE and a base station based on the above description will be described.

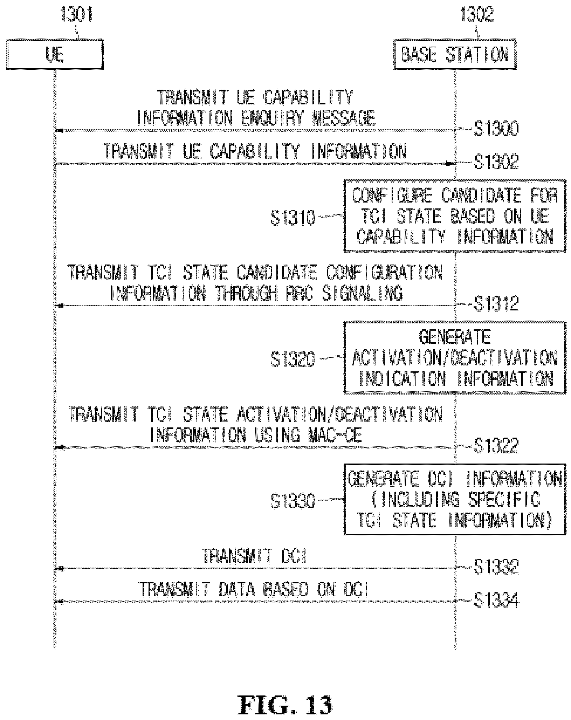

FIG. 13 is a flowchart for a case of configuring a TCI state and performing communication for a UE having multiple panels.

Referring to FIG. 13, a UE 1301 and a base station 1302 are illustrated. The base station 1302 may have two or more TRPs under it. Although TRPs are not illustrated in FIG. 13, it should be noted that the UE 1301 may communicate with one or more TRPs. In addition, the US 1301 and the base station 1302 may further have all or some or additional configurations described in FIG. 2 above. For example, the UE 1301 may further include a configuration for providing a graphical user interface to a user and/or various types of sensors, etc. In addition, the base station 1302 may further include a configuration for communicating with the TRP, a configuration for communicating with an upper node, and/or a configuration for communicating with another base station, etc.

In step S1300, the base station 1302 may transmit a UE capability information enquiry message to the UE 1301. Accordingly, the UE 1301 may receive the UE capability information enquiry message.

In step S1302, the UE 1301 may generate UE capability information in response to the UE capability information enquiry message and transmit it to the base station 1302. At this time, the UE capability information may include information such as the number of panels the UE has, the number of ports, the number of layers, and delay. Accordingly, the base station 1302 may obtain information on the number of panels the UE has, which is included in the UE capability information.

In step S1310, the base station 1302 may configure a candidate for the TCI state based on the UE capability information. As described above, the base station 1302 may determine one of the joint TCI state or the separated TCI state, and configure the joint TCI state pool information or the separated TCI state information for each panel based on the panel number information of the UE. In this regard, as described above, a candidate list for the TCI state may be provided in the form of a list for each panel.

In step S1312, the base station 1302 may transmit an RRC message including candidate information of the TCI state configured in step S1310 to the UE 1301. Accordingly, the UE 1301 may obtain candidate information of the TCI state included in the RRC message and store it in a memory.

In step S1320, the base station 1302 may determine activation or deactivation of at least one TCI state information included in the candidate list for the configured TCI state. Based on this determination, the base station 1302 may generate TCI state information activation or TCI state information deactivation indication information. The TCI state information activation or TCI state information deactivation indication information may be configured for each panel of the UE as described above. In addition, the TCI state information activation or TCI state information deactivation indication information may be indicated by codepoint(s) of a MAC-CE.

In step S1322, the base station 1302 may transmit the TCI state information activation indication information or the TCI state information deactivation indication information generated in step S1320 to the UE 1301 through the MAC-CE. Accordingly, the UE 1301 may obtain the TCI state information activation indication information or the TCI state information deactivation indication information included in the MAC-CE. At this time, if the MAC-CE includes the TCI state information activation indication information, the UE 1301 may activate CC(s) corresponding to the corresponding list. On the other hand, if the MAC-CE includes the TCI state information deactivation indication information, the UE 1301 may deactivate CC(s) corresponding to the corresponding list. Since in this activation/deactivation operation, the MAC-CE may be configured for each panel the UE has, and activation/deactivation may be performed for each panel.

In step S1330, the base station 1302 may generate DCI information when data needs to be transmitted to the UE 1301. At this time, the TCI field of the DCI may indicate a specific index defined in the MAC-CE.

In step S1332, the base station 1302 may transmit the DCI generated in step S1330 to the UE 1301. Therefore, in step S1332, the UE 1301 may receive the DCI and obtain TCI state information included in the DCI. At this time, as described above, the UE 1301 may receive the DCI through the CC configured for each panel.

In step S1334a, the base station 1302 may transmit data to the UE 1301 based on the DCI. Accordingly, the UE 1301 may receive the data transmitted by the base station 1302 based on the TCI state configured for each panel in the DCI.

The above-described FIG. 13 may be an embodiment of the content described in the present disclosure. In other words, the operation of FIG. 13 may constitute one embodiment by only steps S1300 to S1312. In another embodiment, steps S1320 to S1322 may be another embodiment. In another example, steps S1330 to S1334 may be another embodiment. It should be noted that each of the above-described sections may be one embodiment, and two or more of them may be combined, or may be implemented in a form including all operations as described in FIG. 13 as an example.

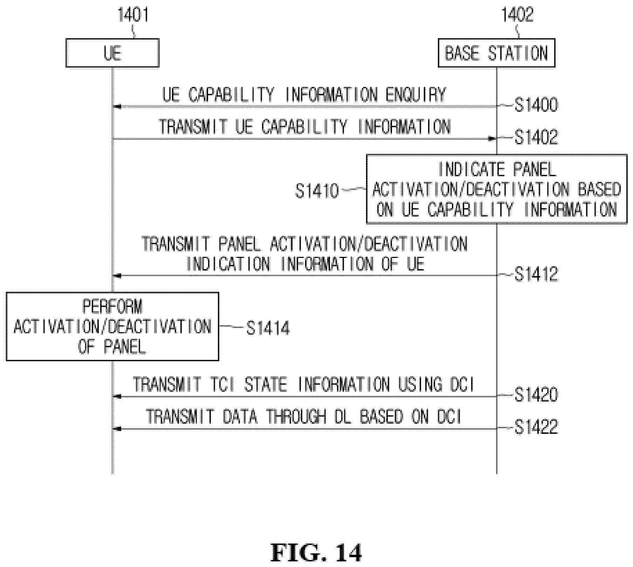

FIG. 14 is a flowchart for a case where a base station instructs on/off at least one of the panels of a UE according to the present disclosure.

Referring to FIG. 14, a UE 1401 and a base station 1402 are illustrated. The UE 1401 and the base station 1402 illustrated in FIG. 14 may have the same configuration as described in FIG. 13. Therefore, description of the overlapping configurations will be omitted.

In step S1400, the base station 1402 may transmit a UE capability information Enquiry message to the UE 1401. Accordingly, the UE 1401 may receive the UE capability information Enquiry message.

In step S1402, the UE 1401 may generate UE capability information in response to the UE capability information enquiry message and transmit it to the base station 1402. At this time, the UE capability information may include information such as the number of panels the UE has, the number of ports, the number of layers, and delay. Accordingly, the base station 1402 may obtain information on the number of panels the UE has, which is included in the UE capability information.

In step S1410, the base station 1402 may generate panel activation or deactivation instruction information of the UE based on the UE capability information. At this time, the activation/deactivation indication may use a MAC-CE or DCI as described above. It should be noted that the embodiment of FIG. 14 exemplifies a case of using the MAC-CE. In the case of using the MAC-CE, an implicit method or an explicit method may be used as described in the above section.

In step S1412, the base station 1402 may transmit a MAC-CE including the panel activation/deactivation indication information of the UE to the UE 1401. Therefore, the UE 1401 may obtain the panel activation/deactivation instruction information based on the MAC-CE transmitted by the base station 1402 in step S1412.

In step S1414, the UE 1401 may activate or deactivate the panel based on the panel activation/deactivation indication information included in the MAC-CE. If deactivation of the panel is indicated, the UE 1401 may deactivate the indicated panel. If the UE 1401 has two panels and deactivation of a specific panel is indicated, communication may be performed using only one panel as in the prior art. On the other hand, if the UE 1401 has two panels and activation of a specific panel or all panels is indicated, communication may be performed using all panels.

In step S1420, the base station 1402 may transmit DCI including TCI state information to the UE 1401. Therefore, the UE 1401 may receive the DCI transmitted by the base station 1402. In addition, the UE may obtain TCI state information included in the received DCI.

In step S1422, the base station 1402 may transmit data via DL based on the DCI transmitted in step S1402. At this time, if the base station 1402 transmits data using two or more TRPs, data may be transmitted for each TRP. In addition, the base station 1402 may transmit data based on the TCI state configured for each panel of the UE 1401. Therefore, the UE 1401 may receive data through different TRPs for each panel.

Meanwhile, although FIG. 14 has been described separately from FIG. 13 described above, it may be performed together using a part of FIG. 13. For example, each of steps S1320 and S1322 of FIG. 13 may include each of steps S1410 and S1412 described in FIG. 14. In other words, step S1320 of FIG. 13 may include step S1410 described in FIG. 14, and step S1322 of FIG. 13 may include step S1412 described in FIG. 14. In this way, when steps S1410 and S1412 of FIG. 14 are included in FIG. 13, panel on/off of the UE may be indicated together.

The operation of the method according to the present disclosure may be implemented as a computer-readable program or code on a computer-readable recording medium. The computer-readable recording medium includes all types of recording devices that store information that can be read by a computer system. In addition, the computer-readable recording medium may be distributed over network-connected computer systems so that the computer-readable program or code may be stored and executed in a distributed manner.

In addition, the computer-readable recording medium may include a hardware device specially configured to store and execute program instructions, such as ROM, RAM, flash memory, etc. The program instructions may include not only machine language codes generated by a compiler, but also high-level language codes that can be executed by a computer using an interpreter, etc.

While some aspects of the present disclosure have been described in the context of an apparatus, that may also represent a description of a corresponding method, wherein a block or device corresponds to a method step or a feature of a method step. Similarly, aspects described in the context of a method may also be described as a feature of a corresponding block or item or a corresponding device. Some or all of the method steps may be performed by (or using) a hardware device, such as, for example, a microprocessor, a programmable computer or an electronic circuit. In some embodiments, at least one or more of the most significant method steps may be performed by such a device.

A programmable logic device (e.g., a field-programmable gate array) may be used to perform some or all of the functions of the methods described in the present disclosure. A field-programmable gate array may operate with a microprocessor to perform one of the methods described in the present disclosure. In general, the methods are preferably performed by some hardware device.

Although the present disclosure has been described with reference to preferred embodiments thereof, it will be understood by those skilled in the art that various modifications and changes may be made to the present disclosure without departing from the spirit and scope of the present disclosure as set forth in the claims below.

## Claims

1. A method of a user equipment (UE), the method comprising:
receiving a UE capability information enquiry message from a base station;
transmitting UE capability information including a number of panels of the UE and a number of ports to the base station, in response to reception of the UE capability information enquiry message; and
receiving higher layer signaling including transmission configuration index (TCI) state pool information of each panel from the base station,
wherein the TCI state pool information configured for each panel includes cell lists including one or more cells.

2. The method of claim 1, wherein the TCI state pool information configured for each panel is composed of:
a joint TCI state indication commonly indicated in a downlink (DL)/uplink (UL) channel or
the DL channel separate TCI state indication and the UL channel separate TCI state indication.

3. The method of claim 2, wherein in the TCI state pool information configured for each panel, a joint TCI state indication is configured for a first panel of the UE and the DL channel separate TCI state indication and the UL channel separate TCI state indication is configured for a second panel of the UE.

4. The method of claim 1, further comprising receiving a message indicating activation or deactivation of a TCI state in each of panels of the UE from the base station,
wherein indication of activation or deactivation of the TCI state in each of the panels of the UE is indicated using a cell list.

5. The method of claim 4, wherein indication of activation or deactivation of the TCI state in each of the panels of the UE is indicated by activation/deactivation of a reference cell representing cells of the cell list.

6. The method of claim 11, further comprising:
receiving a second message indicating activation or deactivation of at least one of a plurality of panels when the UE has the plurality of panels; and
communicating with the base station based on indication of activation or deactivation of the second message.

7. A user equipment (UE) comprising:
at least one processor,
wherein the at least one processor causes the UE to:
receive a UE capability information enquiry message from a base station;
transmit UE capability information including a number of panels of the UE to the base station, in response to reception of the UE capability information enquiry message; and
receive higher layer signaling including transmission configuration index (TCI) state pool information of each panel from the base station,
wherein the TCI state pool information configured for each panel includes cell lists including one or more cells.

8. The UE of claim 7, wherein the TCI state pool information configured for each panel is composed of:
a joint TCI state indication commonly indicated in a downlink (DL)/uplink (UL) channel or
the DL channel separate TCI state indication and the UL channel separate TCI state indication.

9. The UE of claim 8, wherein in the TCI state pool information configured for each panel, a joint TCI state indication is configured for a first panel of the UE and the DL channel separate TCI state indication and the UL channel separate TCI state indication is configured for a second panel of the UE.

10. The UE of claim 7, wherein the at least one processor further causes the UE to receive a message indicating activation or deactivation of a TCI state in each of panels of the UE from the base station, and
wherein indication of activation or deactivation of the TCI state in each of the panels of the UE is indicated using a cell list.

11. The UE of claim 10, wherein indication of activation or deactivation of the TCI state in each of the panels of the UE is indicated by activation/deactivation of a reference cell representing cells of the cell list.

12. The UE of claim 7, wherein the at least one processor causes the UE to:
receive a second message indicating activation or deactivation of at least one of a plurality of panels when the UE has the plurality of panels; and
communicate with the base station based on indication of activation or deactivation of the second message.

13. A method of a base station, the method comprising:
transmitting a UE capability information enquiry message to a user equipment (UE);
receiving UE capability information including a number of panels of the UE from the UE; and
transmitting higher layer signaling including transmission configuration index (TCI) state pool information of each panel to the UE based on panel number information of the UE when the UE has a plurality of panels,
wherein the TCI state pool information configured for each panel includes cell lists including one or more cells.

14. The method of claim 13, wherein the TCI state pool information configured for each panel is composed of:
a joint TCI state indication commonly indicated in a downlink (DL)/uplink (UL) channel or
the DL channel separate TCI state indication and the UL channel separate TCI state indication.

15. The method of claim 14, wherein in the TCI state pool information configured for each panel, a joint TCI state indication is configured for a first panel of the UE and the DL channel separate TCI state indication and the UL channel separate TCI state indication is configured for a second panel of the UE.

16. The method of claim 13, further comprising:
generating a message indicating activation or deactivation of a TCI state using an update list corresponding to each of panels of the UE when activation or deactivation is required among cells included in the update list of the TCI state pool; and
transmitting a first message indicating activation or deactivation of the generated TCI state to the UE.

17. The method of claim 16, wherein the first message is transmitted through medium access control-control element (MAC-CE) signaling.
